# EUROPÄISCHE PATENTSCHRIFT

(11) **EP 2 505 303 B1**
(45) Veröffentlichungstag und Bekanntmachung des Hinweises auf die Patenterteilung: **07.05.2014**
(21) Anmeldenummer: 11160222.3
(22) Anmeldetag: 29.03.2011
(51) Int. Cl.: B23Q 1/76

(54) **Lünette**
Stationary support
Lunette

(43) Veröffentlichungstag der Anmeldung: 03.10.2012
(73) Patentinhaber: SMW-AUTOBLOK Spannsysteme GmbH, 88074 Meckenbeuren (DE)
(72) Erfinder: Maurer, Eckhard, 88094 Oberteuringen (DE); Marquart, Jürgen, 88677 Markdorf (DE)
(74) Vertreter: Engelhardt & Engelhardt

(56) Entgegenhaltungen:
- EP-A1- 0 554 506
- EP-A2- 1 302 275

## Beschreibung

Die Erfindung bezieht sich auf eine Lünette zur Zentrierung eines rotationssymmetrischen Werkstückes im Raum nach dem Oberbegriff des Patentanspruches 1.

Derartige Lünetten werden zur Abstützung von rotationssymmetrischen Werkstücken an Werkzeugmaschinen seit Jahrzehnten eingesetzt. Insbesondere bei schweren und langen rotationssymmetrischen Werkstücken ist es notwendig, diese im Raum zentrisch durch mehrere voneinander beabstandete Lünetten zu fixieren, um die Durchbiegung des Werkstückes auszugleichen. Die Werkstücke werden nämlich durch die Eigengewichtskraft durchgebogen, und zwar insbesondere wenn diese zur spanabhebenden Bearbeitung rotieren.

Mittels einer Vielzahl von Bearbeitungsschritten entstehen zudem zusätzliche Bearbeitungskräfte, die auf die Werkstücke einwirken und durch die die zentrische Positionierung des Werkstückes verändert werden könnten. Durch die bekannten Lünetten soll demnach verhindert sein, dass durch die Bearbeitungskräfte, die auf die Werkstücke einwirken, solche Positionsveränderungen eintreten.

Durch die spanabhebende Bearbeitung reduziert sich die Gewichtskraft der Werkstücke, wodurch oftmals ebenfalls eine Positionsveränderung stattfindet, so dass die Lünetten nach einer bestimmten Reduzierung der Gewichtskraft der Werkstücke erneut aufzumachen sind, um die Werkstücke derart im Raum zu positionieren, dass die Längsachse des eingespannten Werkstückes auf einer Geraden verläuft, ohne das von dieser Zentrumsachse eine Abweichung vorliegt.

Aus der EP 0 554 506 B1 ist eine Lünette mit einer internen Einstellungsvorrichtung für die Zentrumsachse der Werkstücke zu entnehmen. Es ist nämlich erforderlich, die beiden äußeren Lünettenarme unterschiedlich zueinander zu bewegen, um die vertikale Ausrichtung des Werkstückes zu erreichen. Die horizontale Zentrierung des Werkstückes erfolgt gemeinsam mit allen drei Lünettenarmen.

Durch die EP 0 554 506 B1 wird zur vertikalen und horizontalen Ausrichtung der Lünettenarme eine äußerst konstruktiv aufwendige Verstelleinrichtung vorgeschlagen.

Für eine solche Verstelleinrichtung hat sich als nachteilig herausgestellt, dass diese in ihrer Herstellung sehr teuer ist und dass die Bedienung und Funktionsweise der Einstellvorrichtung kompliziert ist und daher Fachpersonal benötigt wird, durch das mit entsprechender Erfahrungen die vertikale und horizontale Ausrichtung der Lünettenarme vorgenommen wird.

Aus der DE 60208835 T2 bzw. der EP 1 302 275 A2 ist eine vertikal verstellbare Lünette zu entnehmen, deren Lünettenarme zeitlich versetzte Anschlagpunkte auf der Kontaktfläche des Werkstückes mittels Wipp- und Gleitelemente aufweisen, die an den Gehäusehälften gelagert sind.

Durch die Gleit- und Wippelemente, die auch als Stößel bezeichnet sind, werden die Positionen der beiden äußeren Lünettenarme synchron zueinander derart verstellt, dass die an den Lünettenarmen abstehenden Steuerbolzen gleichzeitig oder zeitlich versetzt zueinander an den Anlageflächen in Wirkkontakt gelangen und somit in Richtung des Werkstückes bewegt sind. Durch ein Verschieben der Gleitelemente, quer zur Bewegungsrichtung des Mittelstückes und die an diesen angeformte schräge Fläche, erfolgt die angesprochene Einstellung der Zustellabläufe der beiden äußeren Lünettenarme.

Dieser Stand der Technik hat sich zur Einstellung der Zustellbewegung der Lünettenarme zwar bewährt, jedoch sind zusätzliche Bauteile anzufertigen und Bohrungen in das Mittelstück bzw. das Gehäuse einzuarbeiten, in denen die Gleit- und Wippelemente verschiebbar gelagert sind. Die Fertigung solcher hochpräzisen Bauteile ist äußerst kostenaufwendig, denn die Gleit- und Wippelemente müssen identische schräg verlaufende Anlageflächen aufweisen. Wenn nämlich Fehlertolleranzen aufgrund von herstellungsbedingten Tolleranzabweichungen vorliegen, ist die synchrone Zustellung bzw. Einstellung der beiden äußeren Lünettenarme nicht möglich, denn es entsteht ein ungewolltes Verschieben des Werkstückes.

Es ist daher Aufgabe der Erfindung, eine Lünette der eingangs genannten Gattung zur Verfügung zu stellen, durch die gewährleistet ist, dass hohe Bearbeitungskräfte zuverlässig abgestützt sind, ohne dass die zentrische Positionierung des Werkstückes im Raum durch diese Kräfte verändert ist und dass gleichzeitig die Zentrierung des Werkstückes im Raum auf einfache und schnelle Art durch die Lageveränderung der Lünettenarme bzw. des Mittelstückes einstellbar ist, ohne dass hierfür komplexe Einstellschritte erforderlich sind.

Diese Aufgaben sind erfindungsgemäß durch die Merkmale des kennzeichnenden Teils von Patentanspruch 1 gelöst.

Weitere vorteilhafte Weiterbildungen der Erfindung ergeben sich aus den Unteransprüchen.

Dadurch, dass in den beiden Gehäusehälften zwei Führungsleisten axial verschiebbar eingesetzt sind, in denen jeweils eine gekrümmte Führungskurve eingearbeitet ist, können die beiden äußeren Lünettenarme mittels von diesen abstehenden Führungsbolzen in die Führungskurven verschiebbar gelagert werden, um zum Einen den Abstand zwischen dem Mittelstück und dem einzuspannenden Werkstück mittels der ersten Halbschale und zum Anderen die Position der Führungsleisten zueinander mittels der zweiten Halbschale eingestellt werden, wodurch die Position des Werkstückes im Raum derart ausgerichtet werden kann, dass die Rotationsachse des Werkstückes fluchtend zu dem Mittelpunkt der Lünette verläuft.

Die Einstellung der Halbschalen ist auf einfache Art und Weise mit Hilfe der Einstellschrauben und der Druckfedern, ohne hierfür erhebliche Berufserfahrung zu benötigen, möglich, denn die Halbschalen werden senkrecht zu der Längsachse der Lünette in Ihrer Position bezogen auf die Gehäusehälften verändert, wodurch in kleinsten Schritten der Abstand des Mittelstückes zu dem Werkstück und die Positionierung der Führungsleisten einstellbar ist.

Zudem ist die Fertigung der benötigten Bauteile kostengünstig herstellbar, denn die notwendige Präzision ist lediglich im Bereich der Führungskurve in den jeweiligen Führungsleisten notwendig, wenn die Führungsbolzen nämlich an diese zur Anlage gelangen und von dieser entlang der Kontur der Führungskurve bewegt sind.

In der Zeichnung ist ein erfindungsgemäßes Ausführungsbeispiel dargestellt, das nachfolgend näher erläutert ist. Im Einzelnen zeigt:
- Figur 1: eine Lünette mit zwei Gehäusehälften, zwischen denen ein plattenförmiges Mittelstück axial verschiebbar eingesetzt ist, das durch einen Betätigungskolben angetrieben ist und mit drei dem Mittelstück zugeordneten Lünettenarmen, durch die ein Werkstück im Raum zu zentrieren ist, und mit zwei in einer der Gehäusehälften eingesetzten und quer zur Bewegungsrichtung des Mittelstückes bewegbaren sichelförmig gekrümmten Halbschalen, in Explosionsdarstellung,
- Figur 2: die Lünette gemäß Figur 1, in Explosionsdarstellung und im teilweise zusammengebauten Zustand,
- Figur 3a: die Lünette gemäß Figur 1, im zusammengebauten und im Spannzustand des Werkstückes,
- Figur 3b: die Lünette gemäß Figur 3a entlang der Schnittlinie IIIb - IIIb,
- Figur 4a: die Lünette gemäß Figur 1, in Explosionsdarstellung mit Einzelbauteilen in vergrößerter Ansicht und im Bereich des oberen äußeren Lünettenarmes,
- Figur 4b: die Lünette gemäß Figur 1, in Explosionsdarstellung und vergrößerter Ansicht im Bereich des unteren Lünettenarms,

- Figuren 5a bis 5e: die Lünette gemäß Figur 3a, in unterschiedlichen Betriebsstellungen, nämlich von einer Ausgangsposition bis zu einem Spannzustand,
- Figuren 6a Und 6b: die Verstellmöglichkeiten der ersten Halbschale in den beiden Gehäusehälften gemäß Figur 3a, zur horizontalen Ausrichtung der Lünettenarme, jeweils im Schnitt und
- Figuren 7a Und 7b: die Relativbewegungen der zweiten Halbschale gemäß Figur 3a in den Gehäusehälften, zur vertikalen Zentrierung des Werkstückes mittels den beiden äußeren Lünettenarmen, jeweils im Schnitt.

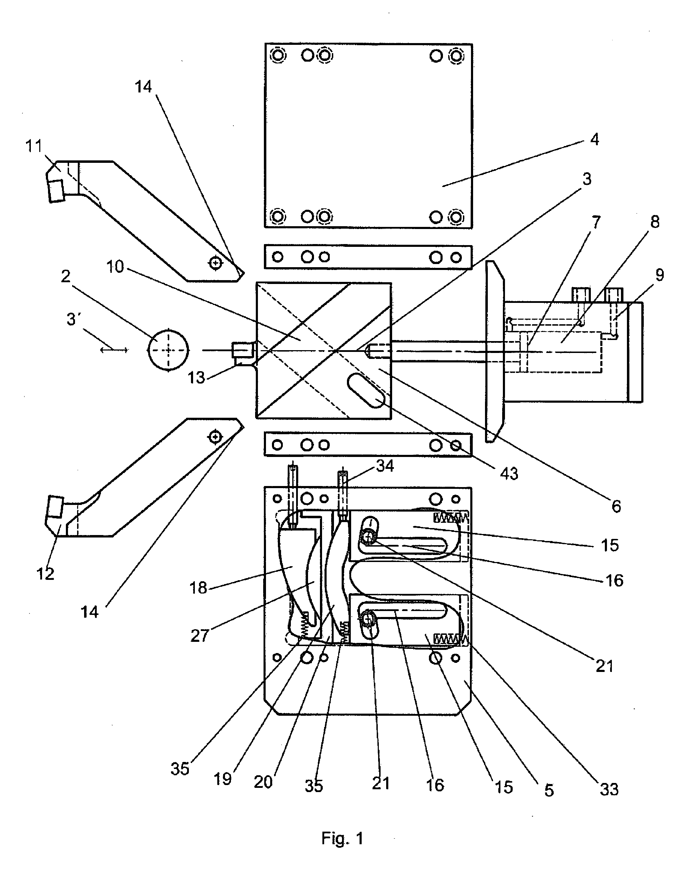

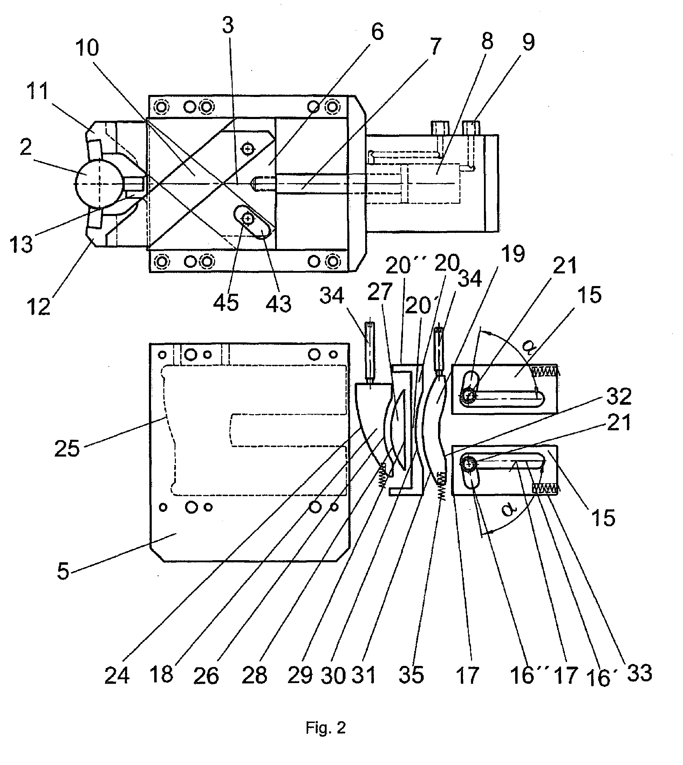

In den Figuren 1 und 2 ist eine Lünette 1 abgebildet, durch die ein rotationssymmetrisches Werkstück 2 im Raum derart zentriert und drehbar gehalten ist, dass die Rotationsachse des Werkstückes 2 möglichst keine Durchbiegung aus der Horizontalen aufgrund von Eigengewichtskräften und durch auf das Werkstück 2 einwirkenden Bearbeitungskräfte erfährt. Die Rotationsachse des Werkstückes 2 soll demnach durch die Lünette 1 im Raum in einer vorgegebenen Position gehalten sein.

Die Lünette 1 besteht aus zwei Gehäusehälften 4 und 5, die eine Längsachse 3 aufweisen, die senkrecht zu der Rotationsachse des Werkstückes 2 verläuft. In den beiden Gehäusehälften 4 und 5 ist ein Mittelstück 6 axial verschiebbar gelagert, dessen Bewegungsrichtung mit der Bezugsziffer 3' bezeichnet ist und die fluchtend zu der Längsachse 3 der Lünette 1 verläuft.

Das Mittelstück 6 ist beispielsweise über eine Schrauben- Gewinde-Verbindung mit einem Betätigungskolben 7 verbunden. Der Betätigungskolben 7 verläuft in einem Druckraum 8, der mittels Steuerleitungen 9, beispielsweise mit Hydraulikflüssigkeit, befüllbar bzw. evakuierbar ist, so dass der Druckraum 8 unterschiedliche Druckzustände aufweist, durch die der Betätigungskolben 7 in Hubbewegung versetzt werden kann. Durch den Betätigungskolben 7 ist demnach das Mittelstück 6 in Bewegungsrichtung 3' antreibbar und auf das Werkstück 2 zustellbar bzw. von diesem wegziebar.

In dem Mittelstück 6 sind zwei Linearführungsnuten 10 eingearbeitet, die auf den beiden gegenüberliegenden großflächigen Stirnseiten des Mittelstückes 6 kreuzweise zueinander verlaufen. Die beiden Linearführungsnuten 10 sind schräg, vorzugsweise in einem Winkel von etwa 10° bis 30° bezogen auf die Längsachse 3 der Lünette 1 angeordnet.

In die Linearführungsnuten 10 sind zwei Lünettenarme 11 und 12 der Lünette 1 verschiebbar eingesetzt. Zwischen den beiden äußeren Lünettenarmen 11 und 12 ist ein mittlerer Lünettenarm 13 unmittelbar an dem Mittelstück 6 befestigt, so dass dieses zwischen den beiden äußeren Lünettenarmen 11 und 12 angeordnet ist. Die drei Lünettenarme 11, 12 und 13 sind dem einzuspannenden Werkstück 2 zugewandt und ragen daher teilweise sowohl aus dem Mittelstück 6 als auch aus den beiden Gehäusehälften 4 und 5 hinaus. Durch die Bewegung des Mittelstückes 6 in Richtung des Werkstückes 2 werden daher die drei Lünettenarme 11, 12 und 13 gemeinsam und gleichschnell auf das Werkstück 2 zugestellt. Eine Relativbewegung der beiden äußeren Lünettenarme 11 und 12 bezogen auf das Mittelstück 6 erfolgt in der Linearführungsnut 10 zunächst während der Zustellung des Mittelstückes 6 nicht.

Des Weiteren sind zwischen den beiden Gehäusehälften 4 und 5 zwei Führungsleisten 15 angeordnet, die parallel zu der Längsachse 3 und beabstandet von dieser verlaufen. Die Führungsleisten 15 sind in einer der beiden Gehäusehälften 4 oder 5 geringfügig gleitend parallel zu der Längsachse 3 gelagert, so dass die Position der Führungsleisten 15 relativ zu den Gehäusehälften 4 und 5 veränderbar sind. Die Führungsleisten 15 liegen in Längsrichtung 3 der Lünette 1 an den Gehäusehälften 4 bzw. 5 an und werden von diesen abgestützt in die Steuerkurve 41 bzw. 42 eintauchen und die Bewegung der beiden äußeren Lünettenarme 11 und 12 definiert steuern.

Zur Relativbewegung der Führungsleisten 15 und zu dessen Positionierung senkrecht zu der Längsachse 3 sind zwei Halbschalen 18 und 19 vorgesehen. Beide Halbschalen 18 und 19 sind in ihrem Querschnitt sichelförmig gekrümmt, um unterschiedlich groß bemessene Breiten bezogen auf die Bewegungsrichtung 3' des Mittelstückes 6 aufzuweisen. Die erste Halbschale 18 liegt mit ihrer gebogenen Außenseite 24 an einer Anlagefläche 25 der Gehäusehälfte 5 an und wird von dieser in Bewegungsrichtung 3' abgestützt. Die erste Halbschale 18 ist mittels einer Schraube 34 senkrecht zu der Bewegungsrichtung 3' des Mittelstückes 6 bewegbar. Auf der gegenüberliegenden Seite der ersten Halbschale 18 bezogen auf die Schraube 34 ist eine Druckfeder 35 angeordnet, die eine Gegenkraft zu der von der Schraube 34 ausgeübten Kraft aufbringt, so dass die erste Halbschale 18 zwischen der Schraube 34 und der Druckfeder 35 abgestützt ist.

Die Innenseite 26 der ersten Halbschale 18 weist eine konstante Krümmung in Form eines Kreisbogens auf, der als Anlage für ein Ausgleichselement 27 dient. Die der ersten Halbschale 18 zugewandte erste Oberfläche 28 des Ausgleichselementes 27 besitzt eine Kontur, die an die Kontur der Innenseite 26 der ersten Halbschale 18 angepasst ist; die zweite Oberfläche 29 des Ausgleichselementes 27 ist plan ausgestaltet und verläuft senkrecht zu der Längsachse 3.

An der zweiten Oberfläche 29 des Ausgleichselementes 27 ist ein U-förmiger Ausgleichsarm 20 vorgesehen. Der Ausgleichsarm 20 besteht aus zwei parallel zueinander verlaufenden Schenkeln 20", die mittels eines Verbindungssteges 20' verbunden sind. Die beiden Schenkel 20" stützen sich an der Gehäusehälfte 5 parallel zu der Bewegungsrichtung 3' des Mittelstückes 6 ab.

In der dem Ausgleichselement 27 abgewandten Seite des Verbindungssteges 20' ist eine Mulde 30 eingearbeitet, deren Innenkontur im Querschnitt bogenförmig gekrümmt ausgestaltet ist. In die Mulde 30 ist die zweite Halbschale 19 eingesetzt, deren dem Verbindungssteg 20' zugewandten Oberfläche 31 an die Innenkontur der Mulde 30 angepasst ist.

Die zweite Halbschale 19 weist zwei Stirnflächen 32 auf, die jeweils einem der beiden Führungsleisten 15 zugewandt ist und an denen die Führungsleisten 15 anliegen, denn diese werden mittels einer Schraubendruckfeder 33 gegen die Stirnflächen 32 der zweiten Halbschale 19 gedrückt. Aufgrund der von den Schrauben-Druckfedern 33, die parallel zu der Längsachse 3 der Lünette 1 verlaufen, ausgeübte Vorspannkraft werden demnach die Führungsleisten 15 in Richtung auf die zweite Halbschale 19 gedrückt, so dass die zweite Halbschale 19 eine Anpresskraft auf den Ausgleichsarm 20, auf das Ausgleichselement 27 und somit auf die erste Halbschale 18 ausübt. Die erste und zweite Halbschale 18 und 19 sowie das Ausgleichselement 27 und der Ausgleichsarm 20 sind demnach bezogen auf die Bewegungsrichtung 3' des Mittelstücks 6 in Reihe angeordnet und verlaufen senkrecht zu der Längsachse 3.

Auch die zweite Halbschale 19 wird mittels einer Schraube 34 und einer Druckfeder 35 relativ zu dem Verbindungssteg 20' bzw. dem Ausgleichsarm 20 senkrecht zu der Längsachse 3 bewegt, wodurch die Anschlagspositionen der Führungsleisten 15 synchron zueinander verändert werden kann. Dies wird nachfolgend im Einzelnen noch näher erläutert.

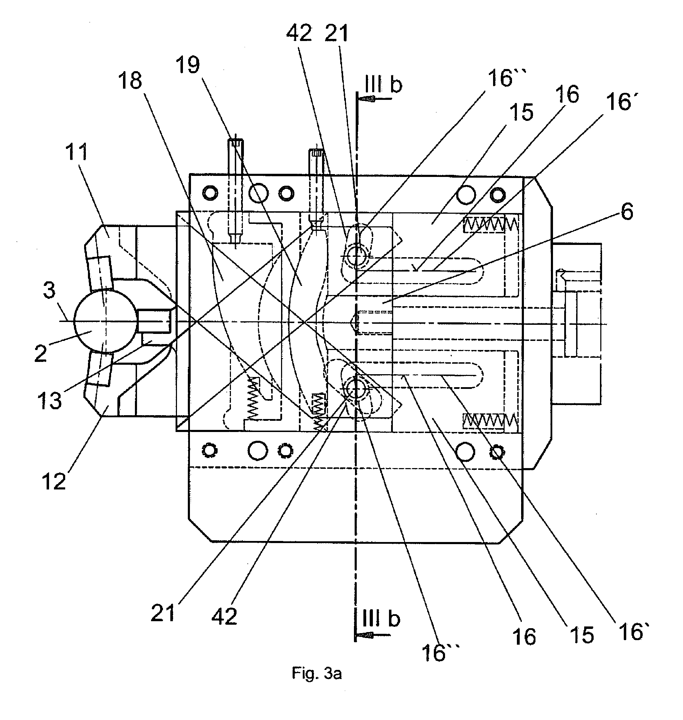

In Figur 3a ist nunmehr der zusammengebaute Zustand der Lünette 1 zu entnehmen und es ist gezeigt, dass die drei Lünettenarme 11, 12 und 13 das Werkstück im Raum fixieren. Die erste und zweite Halbschale 18 und 19 befinden sich in ihrer jeweiligen Mittelstellung bezogen auf die Längsachse 3.

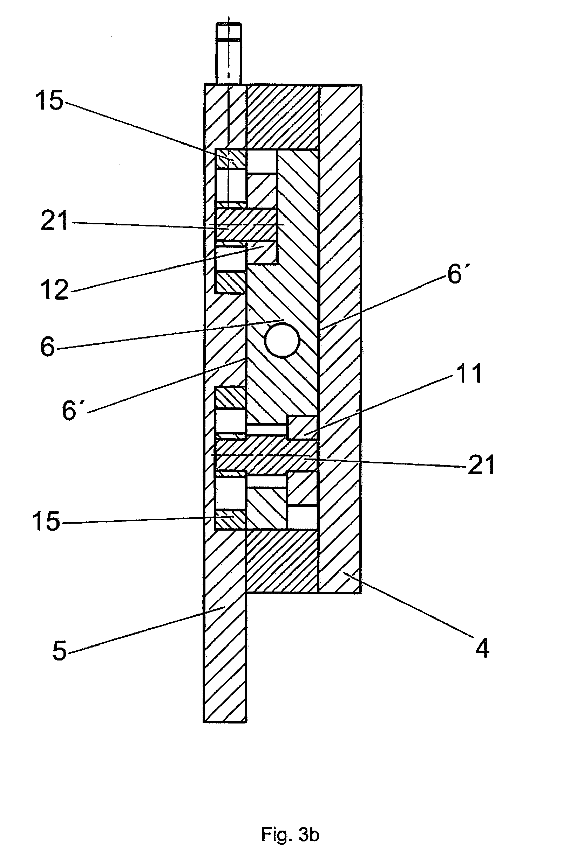

Ferner ist aus den Figuren 3a und 3b ersichtlich, dass in die beiden Führungsleisten 15 jeweils eine Führungskurve 16, die aus zwei Teilbereichen 16' und 16" gebildet ist, eingearbeitet ist. In die Führungskurve 16 ist jeweils ein an dem freien Ende 14 der beiden äußeren Lünettenarme 11 und 12 und senkrecht von diesem abstehenden Führungsbolzen 21 eingesetzt, der in der Führungskurve 16 verschiebbar gelagert ist. Der Führungsbolzen 21 hat die Aufgabe, die beiden äußeren Lünettenarme 11 und 12 über die Führungsleiste 15 zuverlässig an dem Mittelstück 6 zu halten.

Der zweite Teilbereich 16" der Führungskurve 16 steht nach außen etwa in einem Winkel von 80° von dem ersten Teilbereich 16' ab; zwischen dem Führungsbolzen 21 und der Führungskurve 16 liegt kein Spiel vor, so dass die Zustellbewegung der beiden äußeren Lünettenarme 11 und 12 begrenzt ist, wenn der Führungsbolzen 21 in den zweiten Teilbereich 16" der Führungskurve 16 eintaucht.

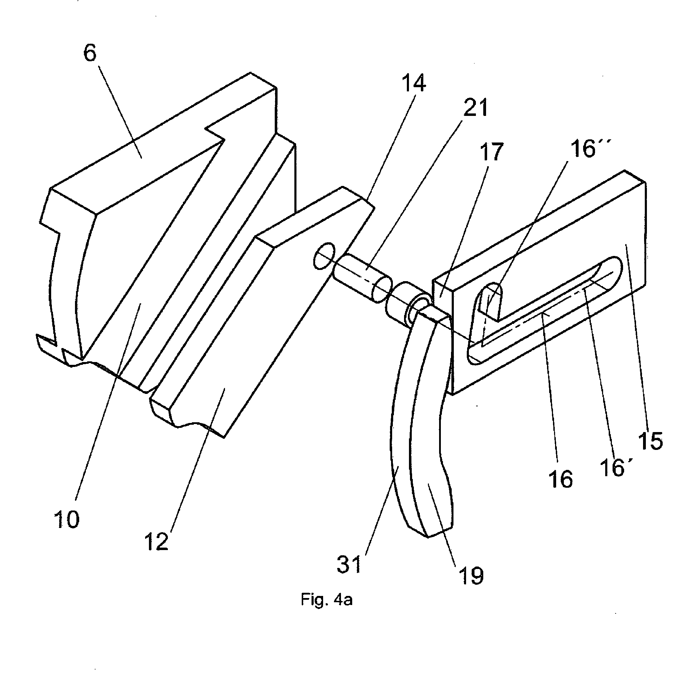

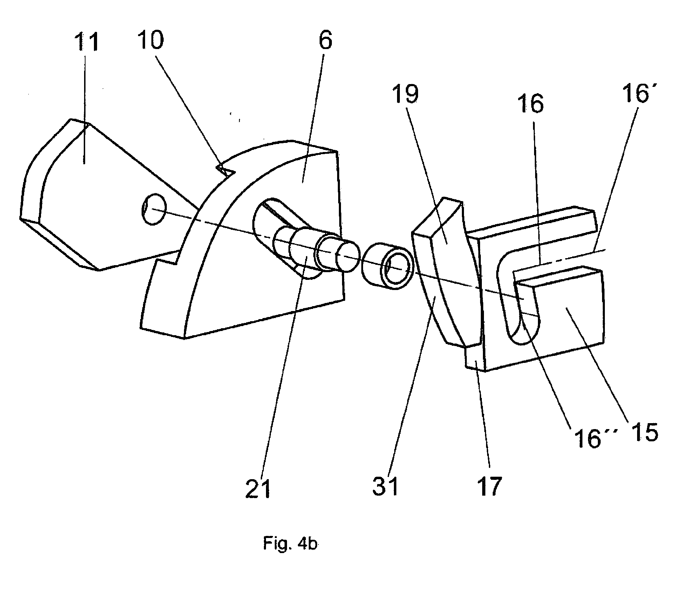

In den Figuren 4a und 4b ist die Sandwichbauweise der Lünette 1 dargestellt, deren einzelnen Bauteile, insbesondere das Mittelstück 6, die beiden äußeren Lünettenarme 11 und 12, die Führungsleisten 15 und die Halbschalen 18 und 19 in unterschiedlichen Ebenen angeordnet sind, die parallel zueinander verlaufen. Solange die beiden Gehäusehälften 4 und 5 fest miteinander verbunden sind und einen ausreichend groß bemessenen Zwischenraum einschließen, können die in den Gehäusehälften 4 und 5 axial verschiebbar gelagerten Bauteile in Richtung auf das Werkstück 2 oder vice verca bewegt werden. Eine solche Bewegung ist zum Einen erforderlich, um die Zustellwege des Mittelstückes 6 exakt auf das Werkstück 2 zu definieren und zum Anderen, um die Anschlagspositionen der beiden äußeren Lünettenarme 11 und 12 synchron aufeinander abzustimmen.

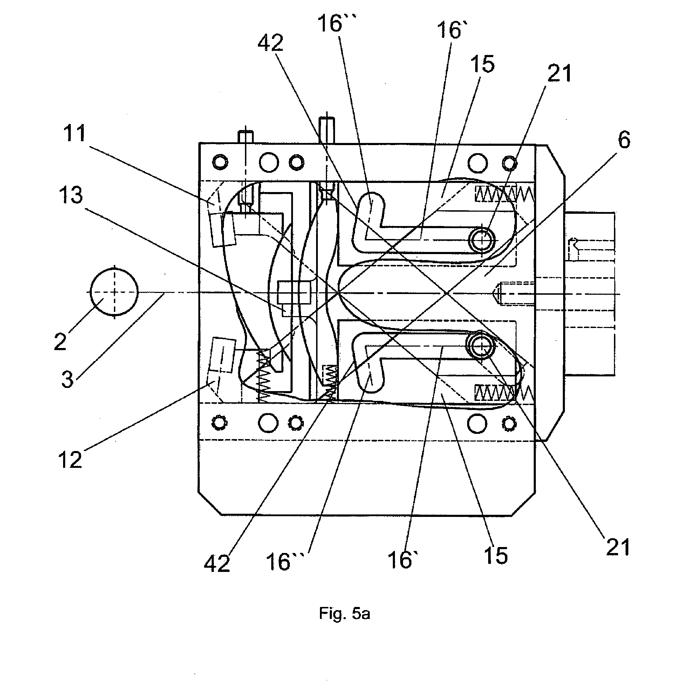

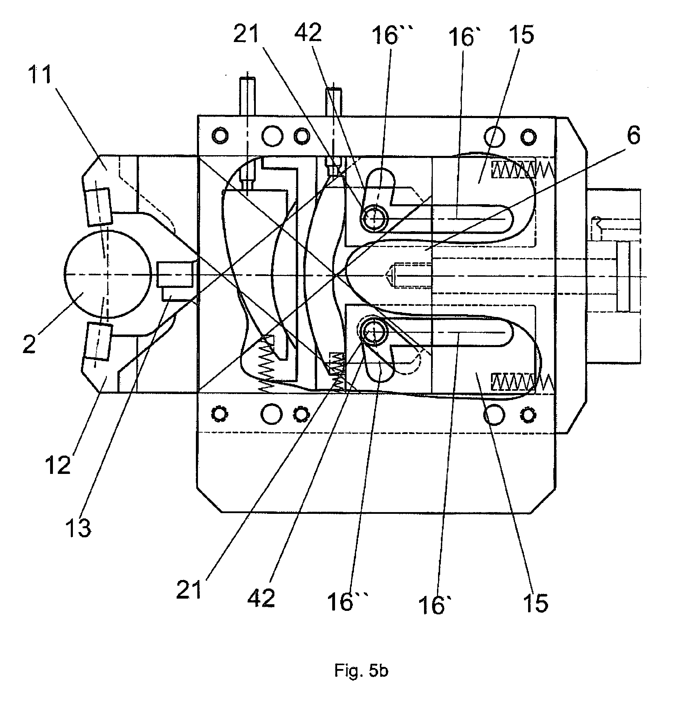

Aus den Figuren 5a bis 5e ist die Zustellbewegung des Mittelstückes 6 in Richtung auf das Werkstück 2 ersichtlich. Die in Figur 5a dargestellte Ausgangssituation wird durch den Antrieb des Mittelstückes 6 in Richtung auf das Werkstück 2 in eine Zwischenposition gemäß Figur 5b überführt. Dabei sind die Führungsbolzen 21 in der Führungsleiste 15 axial verschoben worden, und zwar bis zum Ende des ersten Teilbereichs 16' der Führungskurve 16. Die Lünettenarme 11, 12 und 13 weisen einen bestimmten gleich groß bemessenen Abstand zu dem Werkstück 2 auf und die Führungsbolzen 21 liegen zwischen dem ersten und dem zweiten Teilbereich 16' und 16" an.

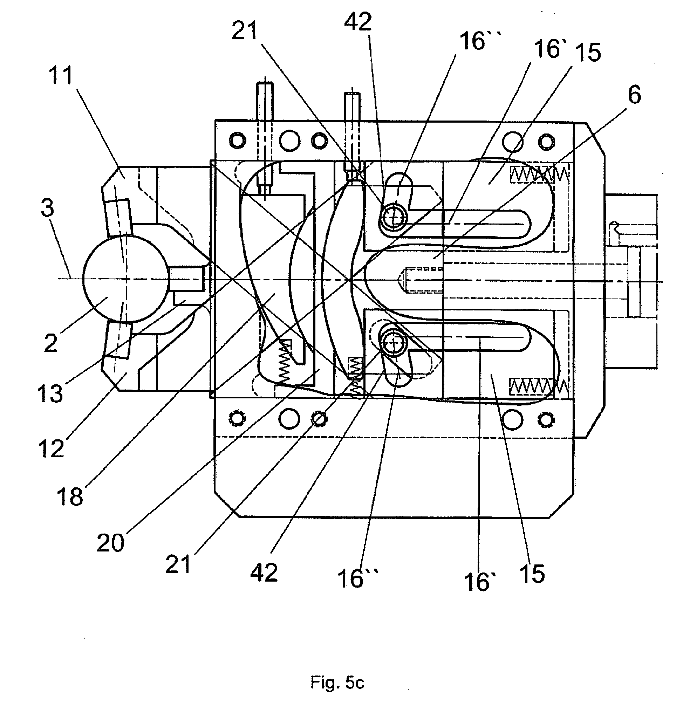

In Figur 5c ist der erste Wirkkontakt der drei Lünettenarme 11, 12 und 13 auf dem Werkstück 2 gezeigt. Der Zustellweg des Mittelstückes 6 ist durch den Betätigungskolben 7 begrenzt. Die durch die erste Halbschale 18 definierte Position des Ausgleichsarmes 20 definiert hingegen die Position des Führungsbolzens 21 innerhalb der Führungskurve 16 und bildet somit für dieses eine Anschlagsfläche. Die daraus resultierende Lage der Führungsbolzen 21 bestimmt den Startzeitpunkt der Spannbewegung der Lünettenarme 11 und 12. Die Führungsbolzen 21 sind demnach teilweise in den nach außen abstehenden zweiten Teilbereich 16" der jeweiligen Führungskurve 16 eingefahren, wodurch die beiden äußeren Lünettenarme 11 und 12 relativ zu dem Mittelstück 6 jeweils nach außen entlang der Linearführungsnut 10 bewegt werden, so dass die dem Werkstück 2 zugewandten freien Enden der beiden äußeren Lünettenarme 11 und 12 auf dieses zugestellt sind.

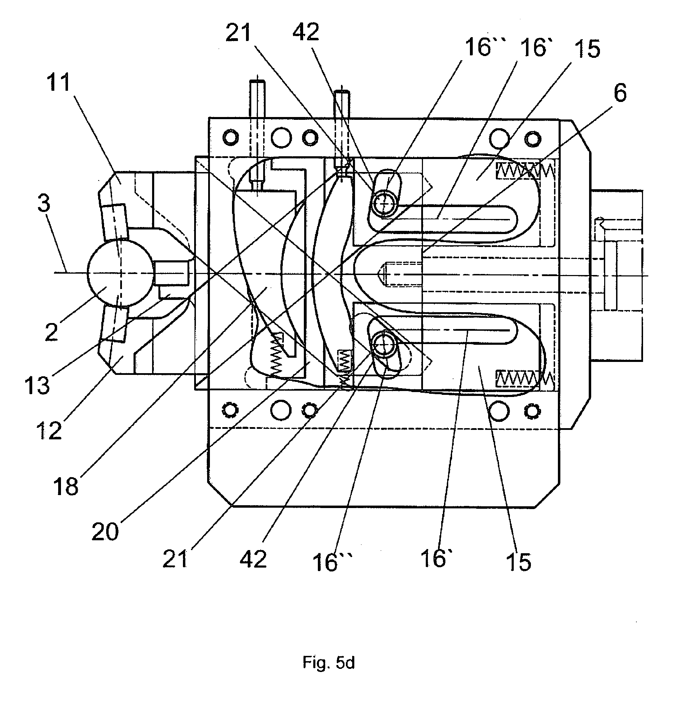

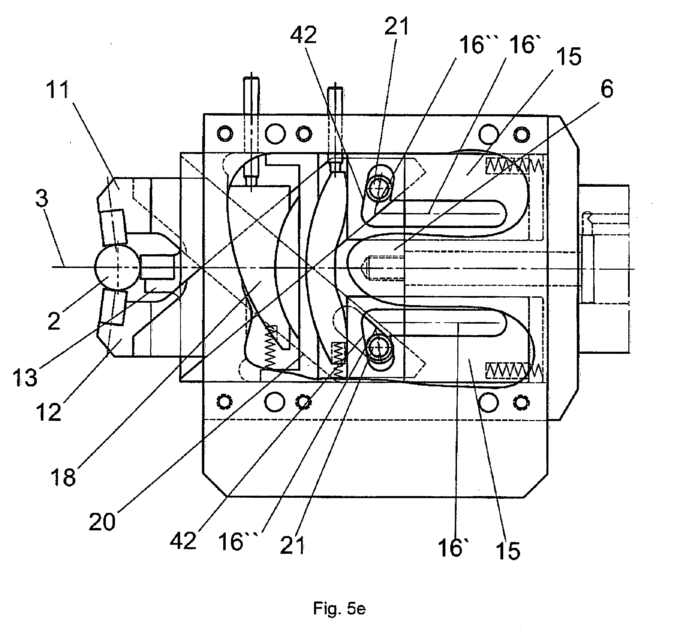

In den Figuren 5d und 5e ist die Spannbewegung der Lünettenarme 11, 12 und 13 zu entnehmen, da die Führungsbolzen 21 weiter in Richtung des zweiten Teilbereiches 16" der jeweiligen Führungskurve 16 einfahren, wodurch die Lünettenarme 11 und 12 eine definierte Spannkraft auf das Werkstück 2 ausüben, wird das Mittelstück 6 und der mittlere Lünettenarm 13 weiter auf das Werkstück 2 zugestellt. Der mittlere Lünettenarm 13 wird aufgrund der axialen Zustellbewegung des Mittelstückes 6 synchron mit den äußeren Lünettenarmen 11 und 12 auf das Werkstück 2 aufgepresst, so dass von allen drei Lünettenarmen 11, 12 und 13 eine gleich groß bemessene Spannkraft auf das Werkstück 2 einwirkt.

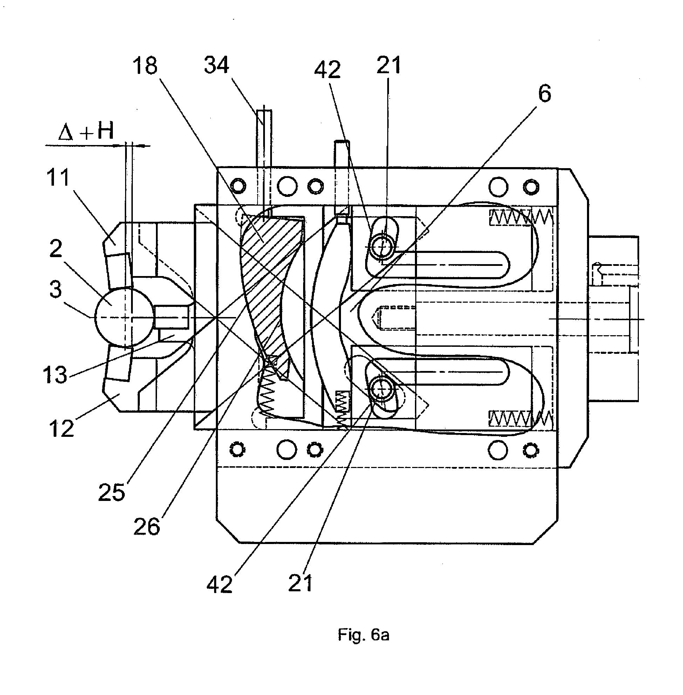

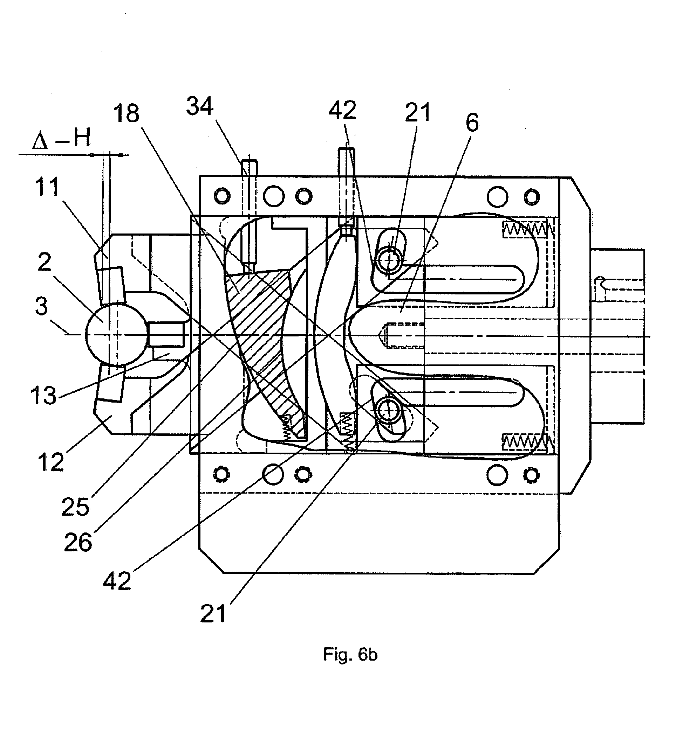

In den Figuren 6a und 6b ist die horizontale Verstellung bzw. die horizontale Positionierung des Werkstückes 2 zu entnehmen. Zu diesem Zweck wird die erste Halbschale 18 mittels der Schraube 34 quer zur Bewegungsrichtung 3' des Mittelstückes 6 bewegt. Aufgrund der sichelförmig gebogenen Querschnittskontur der ersten Halbschale 18, verändert sich dadurch der Abstand zwischen der Anlagefläche 25, der Gehäusehälfte 5 und der Innenseite 26 der ersten Halbschale 18. Diese Abstandsveränderung bewirkt, dass der Zustellweg des Mittelstückes 6 größer oder kleiner bemessen ist als der Zustellweg des Mittelstückes 6, der in den Figuren 5a bis 5e eingestellt ist. Aufgrund der Abstandsvergrößerung oder - verkleinerung des einzuspannenden Werkstückes 2 zu den Gehäusehälften 4, 5 treten die drei Lünettenarme 11, 12 und 13 früher oder später in Wirkverbindung mit dem Werkstück 2. Jedoch sind die Lünettenarme 11, 12 und 13 in Ihrer jeweiligen Zustellbewegung fest mit dem Mittelstück 6 gekoppelt, so dass die Zustellungsgeschwindigkeiten der Lünettenarme 11, 12 und 13 gleich groß sind und deren Abstand zu dem Werkstück 2 derart eingestellt ist, dass der Wirkkontakt der jeweiligen Lünettenarme 11, 12 und 13 exakt zu dem Zeitpunkt erfolgt, durch den die Zentrierung des Werkstückes 2 zu erfolgen hat.

Folglich verändert sich dadurch die Position des Werkstückes 2 im Raum, und zwar ausschließlich in der horizontalen Ebene. Diese Horizontalveränderung des Werkstückes 2 ist schematisch in Figur 6a mit Δ+H bezeichnet. In Figur 6b ist die entgegengesetzte Extremposition und damit die Verschiebung des Werkstückes 2 um den Betrag Δ-H gezeigt.

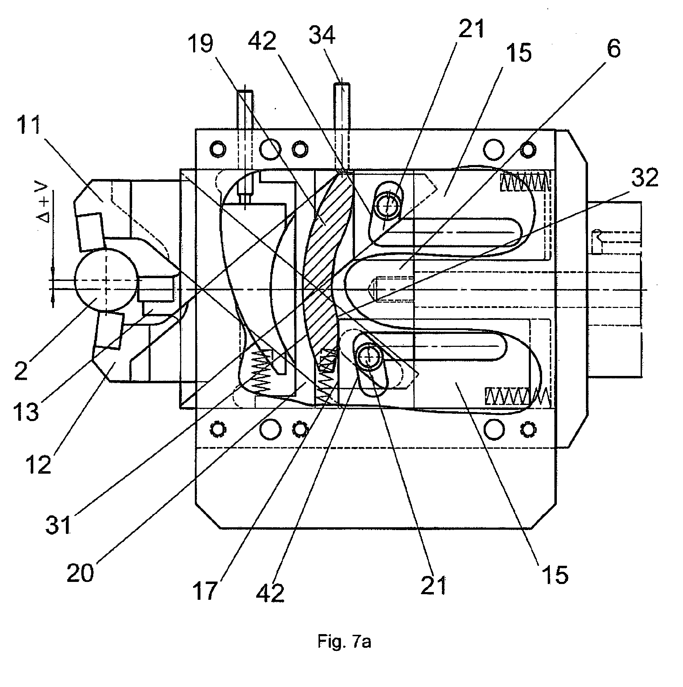

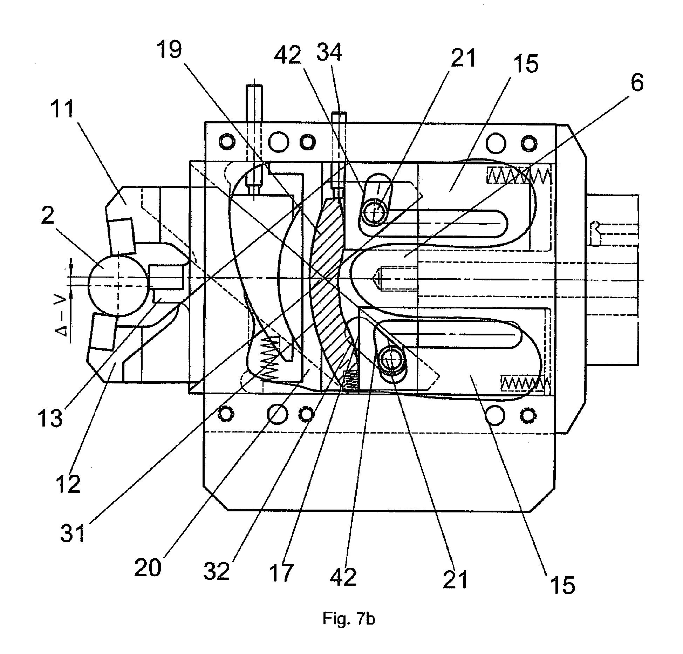

In den Figuren 7a und 7b ist die vertikale Ausrichtung des Werkstückes 2 mittels den beiden äußeren Lünettenarmen 11 und 12 zu entnehmen. Zu diesem Zweck ist die zweite Halbschale 19 mittels der Schraube 34 relativ zu dem U-förmigen Ausgleichsarm 20 und quer zur Bewegungsrichtung 3' des Mittelstückes 6 veränderbar. Aufgrund der sichelförmigen Querschnittskontur der zweiten Halbschale 19 verändert sich der Abstand zwischen dem Ausgleichsarm 20 und den beiden Führungsleisten 15, so dass die Führungsleisten 15 entweder in der Mittelposition fluchtend zueinander verlaufen oder aber in den gezeigten Einstellvarianten der Figuren 7a und 7b versetzt zueinander angeordnet sind.

Dadurch verändert sich der Anschlagszeitpunkt der Führungsbolzen 21, die an den Lünettenarmen 11 und 12 angebracht sind, an den Steuerflächen 42 des zweiten Teilbereiches 16" sobald der Führungsbolzen 21 an der Steuerkurve 42 anschlägt, beginnt der Spanngang der beiden äußeren Lünettenarme 11, 12. Aufgrund der räumlich unterschiedlich ausgerichteten Führungsbolzen 21 tauchen diese nämlich zu unterschiedlichen Zeitpunkten in die zweiten Teilbereiche 16" der Führungskurve 16 ein, so dass die Führungsbolzen 21 zeitlich versetzt zueinander an der Steuerfläche 42 zur Anlage gelangen und von dieser in ihrer Bewegung beinflusst sind. Bei konstanter Zustellgeschwindigkeit des Mittelstückes 6 werden demnach die Bewegungen der äußeren Lünettenarme 11, 12 in Abhängigkeit von der gewählten Position der Führungsleisten 15 und 16 gesteuert. Dies wiederum führt dazu, dass einer der äußeren Lünettenarme 11 oder 12 zeitlich versetzt zu dem jeweils anderen Lünettenarm 12 oder 11 auf das Werkstück 2 zubewegt ist und mit diesem anschließend in formschlüssige Wirkverbindung tritt.

Die Positionsverschiebung des Werkstückes 2 sind in den Figuren 7a und 7b in der vertikalen Ebene mit Δ+V bzw. Δ-V wiedergegeben.

## Patentansprüche

1. Lünette (1) zur Zentrierung eines rotationssymmetrischen Werkstückes (2) im Raum,
bestehend aus:
- zwei zueinander beabstandet angeordneten und fest miteinander verbundenen Gehäusehälften (4, 5),
- mit einem zwischen den beiden Gehäusehälften (4, 5) angeordneten plattenförmigen Mittelstück (6), das mittels eines Betätigungskolbens (7) in axialer Bewegungsrichtung (3') auf das Werkstück (2) verschiebbar in den Gehäusehälften (4, 5) gelagert ist,
- mit zwei in den beiden gegenüberliegenden großflächigen Stirnseiten des Mittelstückes (6) eingearbeiteten Linearführungsnuten (10), die kreuzweise zueinander und schräg zu der Bewegungsrichtung (3') des Mittelstückes (6) verlaufen,
- mit zwei äußeren Lünettenarmen (11, 12), die in jeweils einer der Linearführungsnuten (10) des Mittelstückes (6) verschlebbar gelagert sind,
- und mit einem mittleren Lünettenarm (13), der an dem Mittelstück (6) zwischen den äußeren Lünettenarmen (11, 12) befestigt ist,
**dadurch gekennzeichnet,**
**dass** zwischen den beiden Gehäusehälften (4, 5) zwei in Bewegungsrichtung (3') des Mittelstückes (6) verstellbare Führungsleisten (15) eingesetzt sind, dass in die Führungsleiste (15) jeweils eine gekrümmte Führungskurve (16) eingearbeitet ist, dass in die Führungskurve (16) jeweils ein an dem freien dem Mittelstück (6) zugeordneten Ende (14) der beiden äußeren Lünettenarme (11, 12) ein Führungsbolzen (21) angebracht ist, der axial verschiebbar in einer der Führungskurven (16) eingesetzt ist, dass die Positionen des Mittelstückes (6) bezogen auf den Abstand zwischen dieser und dem einzuspannenden Werkstück (2) mittels einer ersten im Querschnitt sichelförmig gekrümmten Halbschale (18) einstellbar ist, dass die Positionen der beiden Führungsleisten (15) mittels einer zweiten im Querschnitt sichelförmig gekrümmten Halbschale (19) gegenläufig synchron aufeinander abgestimmt veränderbar ist.

2. Lünette nach Anspruch 1,
**dadurch gekennzeichnet,**
**dass** die beiden Halbschalen (18, 19) in Bewegungsrichtung (3') des Mittelstückes (6) in Reihe angeordnet und mittels eines Ausgleichsarms (20) der axial verschiebbar in den beiden Gehäusehälften (18, 19) angeordnet ist, voneinander getrennt sind und dass der Ausgleichsarm (20) eine Anlagefläche für die Endstellung des Mittelstückes (6) bildet.

3. Lünette nach Anspruch 1 oder 2,
**dadurch gekennzeichnet,**
**dass** die Führungskurve (16) in den Führungsleisten (15) zwei Teilbereiche (16', 16") aufweist, dass der erste Teilbereich (16') parallel zu der Bewegungsrichtung (3') des Mittelstückes (6) verläuft und dass der zweite Teilbereich (16") der Führungskurve (16) in einem Winkel (α)von 10° bis 89° zu dem ersten Teilbereich (16'), vorzugsweise in einem Winkel (α) von 80°, verläuft und dass die beiden zweiten Teilbereiche (16") der Führungskurven (16) der Führungsleiste (15) nach außen abstehen.

4. Lünette nach Anspruch 3,
**dadurch gekennzeichnet,**
**dass** der zweite Teilbereich (16") der jeweiligen Führungskurve (16) eine Steuerfläche (42) für den Führungsbolzen (21) der Lünettenarme (11, 12) bildet, durch den die beiden äußeren Lünettenarme (11, 12) während der Bewegung des Mittelstückes (6) in Richtung auf das Werkstück (2) entlang der Steuerfläche (42) nach außen geführt sind und dass die Lünettenarme (11, 12) eine aufeinander zu gerichtete Zustellbewegung in Abhängigkeit von dem Verlauf der Steuerfläche (42) ausführen.

5. Lünette nach einem der vorgenannten Ansprüche,
**dadurch gekennzeichnet,**
**dass** in das Mittelstück (6) eine Aussparung (43) eingearbeitet ist, die von dem Führungsbolzen (21) des oberen äußeren Lünettenarmes (11) durchgriffen ist und dass die Aussparung versetzt zu dem zweiten Teilbereich (16") der Führungskurve (16) der Führungsleiste (15) verläuft.

6. Lünette nach einem der vorgenannten Ansprüche,
**dadurch gekennzeichnet,**
**dass** die beiden Führungsleisten (15) mittels einer Schrauben-Druckfeder (33) gegen die an der zweiten Halbschale (19) angeformten Stirnflächen (32) gedrückt ist.

7. Lünette nach einem der vorgenannten Ansprüche,
**dadurch gekennzeichnet,**
**dass** die erste Halbschale (18) im montierten Zustand mit der dem Werkstück (2) zugewandten Außenseite an einer Anlagefläche, die an einer der beiden Gehäusehälften (4 oder 5) angearbeitet ist, anliegt, dass die Konturen der Anlagefläche (25) und die Außenseite (24) der Halbschale (18) miteinander korrespondieren und dass die Halbschale (18) relativ zu der Anlagefläche (24) und senkrecht zu der Bewegungsrichtung (3') des Mittelstückes (6) verschiebbar gelagert ist.

8. Lünette nach Anspruch 7,
**dadurch gekennzeichnet,**
**dass** die der Anlagefläche (24) gegenüberliegende Innenseite (26) der ersten Halbschale (18), vorzugsweise mit einem konstanten Radius gebogen ist und dass an der Innenseite (26) der ersten Halbschale (18) im montierten Zustand ein Ausgleichselement (27) anliegt, dessen der ersten Halbschale (18) zugewandten Oberfläche (28) an die Innenkontur der Innenseite (26) der ersten Halbschale (18) angepasst und dessen gegenüberliegende Oberfläche (29) plan ausgestaltet ist.

9. Lünette nach Anspruch 8,
**dadurch gekennzeichnet,**
**dass** das Ausgleichselement (27) mit der planen Oberfläche (29) im montierten Zustand in Richtung der Bewegungsrichtung (3') des Mittelstückes (6) spielfrei an dem Ausgleichsarm (20) anliegt.

10. Lünette nach einem der vorgenannten Ansprüche,
**dadurch gekennzeichnet,**
**dass** der Ausgleichsarm (20) im Querschnitt als U-Profil ausgestaltet ist und dass in dem Verbindungssteg (20') des Ausgleichsarms (20) eine im Querschnitt gekrümmte Mulde (30) eingearbeitet ist, in die die zweite Halbschale (19) eingesetzt ist und dass die Oberflächenkontur (31) der zweiten Halbschale (19) mit der Innenkontur der Mulde (30) des Ausgleichsarms (20) korrespondiert.

11. Lünette nach einem der vorgenannten Ansprüche,
**dadurch gekennzeichnet,**
**dass** die beiden Stirnflächen (32) der zweiten Halbschale (19) im montierten Zustand unmittelbar gemeinsam an jeweils einer der Führungsleisten (15) anliegen und eine Anlagefläche (17) für die axiale Bewegung der Führungsleiste (15) bilden.

12. Lünette nach einem der vorgenannten Ansprüche,
**dadurch gekennzeichnet,**
**dass** die erste und zweite Halbschale (18, 19) senkrecht zu der Bewegungsrichtung (3') des Mittelstückes (6), vorzugsweise mittels Schrauben (34) und Schrauben-Druckfedem (34, 35) als Gegenkraft relativ zu den beiden Gehäusehälften (18, 19) bewegbar sind.

## Claims

1. A stationary support (1) for centring a rotationally symmetrical workpiece (2) in the space,
consisting of:
- two housing halves (4, 5) arranged at a distance from one another and firmly connected together,
- with a plate-shaped middle piece (6) arranged between the two housing halves (4, 5), with the middle piece (6) mounted in the housing halves (4, 5) by means of an actuator piston (7) so it can be moved in an axial movement direction (3') to the workpiece (2),
- with two linear guide grooves (10) worked into both opposite large-surface end faces of the middle piece (6), with the linear guide grooves (10) running in a cross-shaped arrangement and at an angle to the movement direction (3') of the middle piece (6),
- with two outer stationary support arms (11, 12), each of which is mounted in one of the linear guide grooves (10) of the middle piece (6) in a movable arrangement,
- and with a middle stationary support arm (13) attached to the middle piece (6) between the outer stationary support arms (11, 12), **characterised in that**,
two guide strips (15) adjustable in the movement direction (3') are inserted between the two housing halves (4, 5), that a curved guide cam (16) is worked into each guide strip (15), that each guide cam (16) has a guide pin (21) attached to it allocated to the free end (14) of the two outer stationary support arms (11, 12) on the middle piece (6) and this guide pin (21) is inserted in one of the guide cams (16) in an axially movable arrangement, that the positions of the middle piece (6) in relation to the distance between this and the workpiece (2) to be clamped can be adjusted by means of a first half shell (18) with a sickle-shaped, curved cross section, that the positions of the two guide strips (15) can be changed in relation to one another by means of a second sickle-shaped, curved half shell (19) in opposite directions in a synchronised manner.

2. The stationary support in accordance with Claim 1, **characterised in that**,
the two half shells (18, 19) are arranged in line in the movement direction (3') of the middle piece (6) and are separated from one another by means of a compensation arm (20) which can be moved axially in the two housing halves (18, 19) and that the compensation arm (20) forms a contact surface for the end position of the middle piece (6).

3. The stationary support in accordance with Claim 1 or 2, **characterised in that**,
the guide cam (16) has two subsections (16', 16") in the guide strips (15), that the first subsection (16') runs parallel to the movement direction (3') of the middle piece (6) and that the second subsection (16") of the guide cam (16) runs at an angle (α) of 10° to 89° in relation to the first subsection (16'), preferably at an angle (α) of 80°, and that the two second subsections (16") of the guide cams (16) of the guide strip (15) project outwards.

4. The stationary support in accordance with Claim 3,
**characterised in that**,
the second subsection (16") of the corresponding guide cam (16) forms a control surface (42) for the guide pin (21) of the stationary support arms (11, 12), by means of which the two outer stationary support arms (11, 12) are guided outwards during the movement of the middle piece (6) in the direction of the workpiece (2) along the control surface (42), and that the stationary support arms (11, 12) perform an advance movement towards one another depending on the profile of the control surface (42).

5. The stationary support in accordance with one of the aforementioned claims, **characterised in that**,
the middle piece (6) has a recess (43) is worked into it through which the guide pin (21) of the upper outer stationary support arm (11) passes, and that the recess runs offset to the second subsection (16") of the guide cam (16) of the guide strip (15).

6. The stationary support in accordance with one of the aforementioned claims, **characterised in that**,
the two guide strips (15) are pressed against the end faces (32) formed on the second half shell (19) by means of a coiled compression spring (33).

7. The stationary support in accordance with one of the aforementioned claims, **characterised in that**,
in the assembled condition, the outside of the first half shall (18) facing the workpiece (2) is in contact with a contact surface worked onto one of the two housing halves (4 or 5), that the contours of the contact surface (25) and the outside (24) of the half shell (18) correspond to one another and that the half shell (18) is mounted so as to be movable relative to the contact surface (24) and at right angles to the movement direction (3') of the middle piece (6).

8. The stationary support in accordance with Claim 7,
**characterised in that**,
the inside (26) of the first half shell (18) opposite to the outside (24) is curved, preferably with a constant radius, and that a compensation element (27) is in contact with the inside (26) of the first half shell (18) in the assembled condition, with the surface (28) of the compensation element (27) facing the first half shell (18) adapted to the inside contour of the inside (26) of the first half shell (18) and its opposite surface (29) is configured as flat.

9. The stationary support in accordance with Claim 8,
**characterised in that**,
the flat surface (29) of the compensation element (27) makes contact with the compensation arm (20) in the assembled condition, without play in the direction of the movement direction (3') of the middle piece (6).

10. The stationary support in accordance with one of the aforementioned claims, **characterised in that**,
the compensation arm (20) has a U-shaped cross section and that a trough (30) with a curved cross section is worked into the connection web (20') of the compensation arm (20), with the second half shell (19) inserted in the trough (30), and that the surface contour (31) of the second half shell (19) corresponds to the inside contour of the trough (30) of the compensation arm (20).

11. The stationary support in accordance with one of the aforementioned claims, **characterised in that,**
the two end faces (32) of the second half shell (19) make direct contact jointly one each on one of the guide strips (15) in the assembled condition, and form one contact surface (17) for the axial movement of the guide strips (15).

12. The stationary support in accordance with one of the aforementioned claims, **characterised in that**,
the first and second shell (18, 19) can be moved at right angles to the movement direction (3') of middle piece (6), preferably by means of screws (34) and coiled compression springs (34, 35) as a counter-force relative to the two housing halves (4, 5).

## Revendications

1. Lunette (1) pour le centrage d'une pièce à usiner à symétrie de rotation (2) dans l'espace,
comprenant:
- deux demi-boîtiers (4, 5) espacés entre eux et rigidement liés ensemble,
- une pièce centrale (6) sous la forme d'une plaque, disposée entre les deux demi-boîtiers (4, 5) et logée entre les deux demi-boîtiers (4, 5) puis se laissant déplacer, à l'aide d'un piston d'actionnement (7), en direction axiale (3') dans les demi-boîtiers (4, 5) vers la pièce à usiner (2),
- avec deux gorges de guidage linéaires (10) pratiquées dans les deux faces frontales opposées à grande surface de la pièce centrale (6), et s'étendant en croix l'une par rapport à l'autre ou en biais par rapport au sens de mouvement (3') de la pièce centrale (6),
- avec deux bras de lunette extérieurs (11, 12) logés de manière déplaçable dans respectivement une des gorges de guidage linéaires (10) de la pièce centrale (6),
- et avec un bras de lunette central (13) fixé sur la pièce centrale (6) entre
les bras de lunette extérieurs (11, 12),
**caractérisée en ce que**,
entre les deux demi-boîtiers (4, 5), il est inséré deux réglettes de guidage (15) réglables dans le sens de mouvement (3') de la pièce centrale (6), que dans la réglette de guidage (15), il est pratiqué respectivement une courbe de guidage (16), que dans la courbe de guidage (16), il est prévu respectivement un boulon de guidage (21) sur l'extrémité libre (14) des deux bras de lunette extérieurs (11, 12) assignée à la pièce centrale (6), le boulon étant monté de manière axialement déplaçable dans une des courbes de guidage (16), que les positions de la pièce centrale (6), référées à l'écartement entre celle-ci et la pièce à usiner serrée (2) se laissent régler à l'aide d'une première demi-coupelle (18) à section transversale en forme de croissant, et que les positions des deux réglettes de guidage (15) se laissent régler de manière synchrone l'une vers l'autre moyennant une demi-coupelle (19) à section transversale en forme de croissant.

2. Lunette d'après la revendication 1,
**caractérisée en ce que**,
en direction de déplacement (3') de la pièce centrale (6), les deux dem-coupelles (18, 19) sont arrangées en ligne et séparées entre elles moyennant un bras de compensation (20) logé de manière axialement déplaçable dans les deux demi-coupelles (18, 19), et que le bras de compensation (20) forme une face de butée pour la position finale de la pièce centrale (6).

3. Lunette d'après les revendications 1 ou 2,
**caractérisée en ce que**
la courbe de guidage (16) dans les réglettes de guidage (15) comporte deux sections (16', 16"), que la première section (16') s'étend parallèle au sens de mouvement (3') de la pièce centrale (6) et que la deuxième section (16") de la courbe de guidage (16) s'étend sous un angle (α) d'entre 10° et 89° par rapport à la première section (16'), de préférence sous un angle (α) de 80°, et que les deux deuxièmes sections (16") des courbes de guidage (16) de la réglette de guidage (15) saillent vers l'extérieur.

4. Lunette d'après la revendication 3,
**caractérisée en ce que**
la deuxième section (16") de la courbe de guidage respective (16) constitue une face de commande (42) pour le boulon de guidage (21) des bras de lunette (11, 12), qui, lorsque la pièce centrale (6) est déplacée en direction de la pièce à usiner (2), amène les deux bras de lunette extérieurs (11, 12) le long de la face de commande (42) vers l'extérieur, et que les bras de lunette (11, 12) décrivent un mouvement d'avance orienté l'un vers l'autre en dépendance de l'évolution de la face de commande (42).

5. Lunette d'après une des revendications précédentes,
**caractérisée en ce que**
dans la pièce centrale (6), il est pratiquée un évidement (43) par lequel traverse le boulon de guidage (21) du haut bras de lunette extérieur (11), et que l'évidement (43) s'étend décalé de la deuxième section (16") de la courbe de guidage (16) de la réglette de guidage (15).

6. Lunette d'après une des revendications précédentes,
**caractérisée en ce que**
moyennant un ressort de pression hélicoïdal (33), les deux réglettes de guidage (15) sont pressées contre les surfaces frontales (32) formées sur la deuxième demi-coupelle (19).

7. Lunette d'après une des revendications précédentes,
**caractérisée en ce que**,
en état monté, la face extérieure de la première demi-coupelle (18) donnant sur la pièce à usiner (2) porte sur une face de butée pratiquée sur un des demi-boîtiers (4 ou 5), que les contours de la face de butée (25) et la face extérieure (24) de la demi-coupelle (18) correspondent entre eux, et que la demi-coupelle (18) est logée de manière déplaçable en relation avec la face de butée (24) et perpendiculairement au sens de mouvement (3') de la pièce centrale (6).

8. Lunette d'après la revendication 7,
**caractérisée en ce que**
la face intérieure (26) de la première demi-coupelle (18) opposée à la face de butée (24) est courbée de préférence avec un rayon constant et que, en état monté, il porte sur la face intérieure (26) de la première demi-coupelle (18) un élément de compensation (27) dont la surface (28) donnant sur la première demi-coupelle (18) est adaptée au contour intérieur de la face intérieure (26) de la première demi-coupelle (18), et dont la surface opposée (29) est plane.

9. Lunette d'après la revendication 8,
**caractérisée en ce que**,
en état monté, la surface plane (29) de l'élément de compensation (27) porte sans jeu en direction du sens de mouvement (3') de la pièce centrale (6) sur le bras de compensation (20).

10. Lunette d'après une des revendications précédentes,
**caractérisée en ce que**
la section transversale du bras de compensation (20) a un profil en U, que dans la traverse de raccordement (20') du bras de compensation (20), il est pratiqué un creux à section transversale courbée (30), dans lequel est insérée la deuxième demi-coupelle (19), et que le contour de la surface (31) de la deuxième demi-coupelle (19) correspond au contour intérieur du creux (30) du bras de compensation (20).

11. Lunette d'après une des revendications précédentes,
**caractérisée en ce que**,
en état monté, les deux faces frontales (32) de la deuxième dem-coupelle (19) portent ensemble directement sur une des réglettes de guidage (15) et forment une surface de butée (17) pour le mouvement axial de la réglette de guidage (15).

12. Lunette d'après une des revendications précédentes,
**caractérisée en ce que**
la première et la deuxième demi-coupelle (18, 19) se laissent déplacer, de préférence moyennant des vis (34) et des ressorts de pression hélicoïdaux (34, 35), perpendiculairement au sens de mouvement (3') de la pièce centrale (6), en tant que force antagoniste relative aux deux demi-boîtiers (4, 5).
